# EUROPÄISCHE PATENTSCHRIFT

(11) **EP 1 164 179 B1**
(45) Veröffentlichungstag und Bekanntmachung des Hinweises auf die Patenterteilung: **07.03.2007**
(21) Anmeldenummer: 01113185.1
(22) Anmeldetag: 30.05.2001
(51) Int. Cl.: C09K 21/02, C04B 28/00, C04B 28/24, B32B 5/30, B32B 15/16

(54) **Faserfreies, nicht brennbares, geschäumtes Isolier- und Brandschutzmaterial und Verfahren zu seiner Herstellung**
Fibre-free, incombustible, foamed insulation and fire-proof material and method for its manufacture
Matériau isolant et ignifugeant mousseux et incombustible exempt de fibres et son procédé de fabrication

(30) Priorität: 16.06.2000 DE 10029869
(43) Veröffentlichungstag der Anmeldung: 19.12.2001
(73) Patentinhaber: Rex Industrie-Produkte Graf von Rex GmbH, 74505 Schwäbisch Hall (DE)
(72) Erfinder: Ludwig, Fritz, 74545 Michelfeld (DE)
(74) Vertreter: TER MEER - STEINMEISTER & PARTNER GbR

(56) Entgegenhaltungen:
- EP-A- 0 341 150
- DD-A- 160 185
- DE-A- 4 411 436
- DE-A- 19 627 961

## Beschreibung

Vorliegende Erfindung betrifft ein faserfreies, nicht brennbares, geschäumtes Isolier- und Brandschutzmaterial auf der Grundlage anorganischer Materialien und ein Verfahren zu seiner Herstellung.

Aus der DE-C-27 16 152 ist bereits eine feuerfeste und/oder schallisolierende Schichtplatte in Form eines nicht-spröden Schaumstoffes aus aufgeblätterten Vermiculitteilchen bekannt, die aber in ihren Feuerfestigkeitseigenschaften und mechanischen Eigenschaften nicht vollständig zu befriedigen vermag.

Die DE-A-30 08 755 beschreibt einen anorganischen elastischen Schaumstoff, der durch Trocknen einer wässrigen, dispergierte Fasern aufweisenden Aufschlämmung, welche Bläschen enthält und im wesentlichen aus anorganischen Fasern, synthetischen, unbeschränkt quellfähigem Fluorglimmer und oberflächenaktiven Substanzen besteht, hergestellt wird, wobei die anorganischen Fasern in der Aufschlämmung miteinander verschlungen sind und zwischen den Fasern bläschenhaltige Filme aus dem Fluorglimmer gebildet sind. Bei der Herstellung dieses Schaumstoffes sind anorganische Langfasern aus Glas, Silika, Kohlenstoff, oder alkalibeständigem Glas erforderlich, welche zum Teil kostspielig, bezüglich ihrer Brandschutzeigenschaften unbefriedigend und insbesondere im Hinblick auf eventuelle Gesundheitsrisiken problematisch sind.

Die DE-C-32 40 985 beschreibt einen Keramikfaser-Schaum in Form eines hitzebeständigen Körpers mit geringem Gewicht, der 50 bis 95 Gew.-% Keramikfasern enthält, namentlich polykristalline Metalloxid-Fasern mit hoher Schmelztemperatur mit Ausnahme von Asbest- und Glasfasern. Allerdings sind auch diese Keramikfasern in jüngster Zeit wegen ihres Gesundheitsrisikos ins Gerede gekommen.

Aus der DE-C-196 28 553 ist ein Schaumstoff für Brandschutz- und/oder Isolierzwecke bekannt, der aus Aluminiumhydrogenphosphat, Wasser, Magnesiumoxid, Manganoxid, einem Schaumbildner, Wasserstoffperoxid und Wasser gebildet worden ist und mindestens einen anorganischen Füllstoff und/oder mindestens ein organisches Verarbeitungshilfsmittel enthält. Dieser Schaumstoff wird bei Anbindung eines Schaumbildners in einer Form aufgeschäumt und durch Reaktion der Bestandteile während 1 bis 3 Tagen ausgehärtet.

Gegenstand der US-Patentschrift 5 871 677 ist ein Verfahren zur Herstellung einer leichten, offenporigen, anorganischen Isolationsplatte mit einer Dichte von weniger als 130 kg/m³, welche durch Aushärten einer Zement und gebrannten Kalk enthaltenden Mischung in einer Form hergestellt wird.

DD160185 A offenbart ein faserfreies geschäumtes Isolier- und Brandschutzmaterial aus anorganischen Materialien, die quellfähiges Schichtsilikat enthalten.

Diese herkömmlichen Isolier- und Brandschutzmaterialien auf Grundlage anorganischer Materialien benötigen entweder zur Erzielung einer ausreichenden Festigkeit anorganische Fasern als Verstärkungsmittel, welche zum Teil aufgrund ihrer gesundheitlichen Nachteile unerwünscht sind oder vermögen aufgrund ihrer mechanischen, physikalischen und/oder Brandschutzeigenschaften nicht voll zu befriedigen.

Die Aufgabe der vorliegenden Erfindung besteht darin, ein faserfreies, nicht brennbares, geschäumtes Isolier- und Brandschutzmaterial auf der Grundlage anorganischer Materialien anzugeben, welches ausgezeichnete mechanische Eigenschaften und insbesondere thermische Isolationseigenschaften besitzt, für die Gesundheit und die Umwelt unproblematisch ist und in einfacher Weise aus kostengünstigen Ausgangsmaterialien hergestellt werden kann.

Diese Aufgabe wird gelöst durch das faserfreie, nicht brennbare, geschäumte Isolier- und Brandschutzmaterial auf Grundlage anorganischer Materialien gemäß Hauptanspruch und das Verfahren zu seiner Herstellung. Die Unteransprüche betreffen bevorzugte Ausführungsformen dieser Erfindungsgegenstände.

Die Erfindung betrifft somit ein faserfreies, nichtbrennbares, geschäumtes Isolier- und Brandschutzmaterial auf Grundlage anorganischer Materialien, das dadurch gekennzeichnet ist, daß es einen Gehalt an 5 bis 20 Gew.-% quellfähigem Schichtsilikat, 30 bis 80 Gew.-% Silikatstäbchen, 10 bis 40 Gew.-% kolloidalem Siliciumdioxid, Aluminiumoxid und/oder Alkalisilikat, 0,05 bis 10 Gew.-% Aluminiumsulfat und 0 bis 15 Gew.-% eines Hydrophobierungsmittels besitzt.

Gemäß einer weiter bevorzugten Ausführungsform enthält das erfindungsgemäße Isolier- und Brandschutzmaterial 7 bis 15 Gew.-% quellfähiges Schichtsilikat, 40 bis 60 Gew.-% Silikatstäbchen, 15 bis 25 Gew.-% kolloidales Siliciumdioxid, Aluminiumoxid und/oder Alkalisilikat, 0,1 bis 1 Gew.-%, noch bevorzugter 0,1 bis 1 Gew.-%, bevorzugter 0,3 bis 0,8 Gew.-% Aluminiumsulfat und 0,1 bis 5 Gew.-% des Hydrophobierungsmittels.

Gemäß einer weiter bevorzugten Ausführungsform besitzt das Isolier- und Brandschutzmaterial eine Dichte von 80 bis 600 kg/m³, vorzugsweise von 100 bis 200 kg/m³, eine nach der DIN Norm 53454 bestimmte Druckfestigkeit von 1 bis 10 N/cm², vorzugsweise 2 bis 6 N/cm², eine nach der DIN Norm 53452 bestimmte Biegefestigkeit von 3 bis 50 N/cm², vorzugsweise 5 bis 15 N/cm², eine nach der DIN Norm 53455 bestimmte Zugfestigkeit von 1 bis 30 N/cm², vorzugsweise 1 bis 5 N/cm². Gemäß einer besonders bevorzugten Ausführungsform der Erfindung schrumpft das erfindungsgemäße Isolier- und Brandschutzmaterial beim Erhitzen auf 1000°C um weniger als 2 %, noch bevorzugter um weniger als 1 %.

Die Eigenschaft der geringen Schrumpfung ist von besonderem Vorteil, da herkömmliche tonartige Isoliermaterialien zwar den Vorteil guter Isoliereigenschaft jedoch den gravierenden Nachteil des Schrumpfens ab 750°C besitzen. Dabei kann das Schrumpfen bei 1000°C durchaus 10 % betragen. In diesem Zusammenhang wird die Schrumpfung in der Weise bestimmt, daß man Probekörper mit den Abmessungen 100 mm x 100 mm herstellt, die Probekörper bei etwa 110°C trocknet und die genauen Formmaße und das Gewicht bestimmt. Dann tempert man den Probekörper bei 1000°C und zwar in Abhängigkeit von der Dicke kürzer oder länger, wobei bei einer Dicke von 5 mm eine Temperzeit von 30 Minuten und bei einer Dicke von 20 mm eine Temperzeit von einer Stunde angewandt wird. Nach Abkühlen des Probekörpers werden die eventuellen Maßänderungen gemessen und in Prozent umgerechnet und dabei die Längen- und Breiten- änderungen zusammengefaßt, während die Dickenänderung getrennt ausgewertet wird. Gleichzeitig wird zusätzlich ein eventueller Gewichtsverlust ermittelt. Das erfindungsgemäße Isolier- und Brandschutzmaterial zeigt bei diesem Test überraschenderweise eine Schrumpfung von weniger als 2%.

Vorzugsweise enthält das erfindungsgemäße Produkt als quellfähiges Schichtsilikat ein fluorfreies Schichtsilikat, namentlich Hectorit, Montmorillonit und/oder Bentonit. Es hat sich überraschenderweise gezeigt, daß es auch ohne die Verwendung von anorganischen Fasern möglich wird, dem erfindungsgemäßen Material eine ausreichende Festigkeit zu verleihen, nämlich durch die Verwendung von Silikatstäbchen. Hierbei handelt es sich um harte, nicht flexible, vorzugsweise kristalline und nicht glasig-amorphe Siliciumdioxid enthaltende Stäbchen, die vorzugsweise einen Durchmesser von 0,5 bis 200 µm, noch bevorzugter von 1 bis 50 µm und eine Länge von bis zu 5 mm, vorzugsweise von 15 bis 1000 µm besitzen. Vorzugsweise verwendet man Silikatstäbchen aus Calciumsilikat, insbesondere Wollastonit. Besonders bevorzugt sind Wollastonitpulver oder -granulate, die im Handel erhältlich sind, beispielsweise von der Firma Osthoff-Petrasch unter dem Handelsnamen Kemolit, Hycon.

Das erfindungsgemäße Brandschutzmaterial enthält vorzugsweise ein Hydrophobierungsmittel, beispielsweise ein Wachs, insbesondere ein Paraffinwachs und noch bevorzugter ein Silikon-Hydrophobierungsmittel, namentlich ein Polyorganosiloxan, wie sie im Handel üblicherweise für die Hydrophobierung von Baumaterialien eingesetzt werden. Das in das erfindungsgemäßen Isolier- und Brandschutzmaterial eingebrachte Hydrophobierungsmittel verhindert ein Quellen des quellfähigen Schichtsilikats bei hoher Luftfeuchtigkeit und damit eine Zerstörung des Materials bei hoher Luftfeuchtigkeit oder bei Frost und eine Verschlechterung der Isoliereigenschaften durch aufgenommene Luftfeuchtigkeit.

Gemäß einer besonders bevorzugten Ausführungsform ist das erfindungsgemäße Isolier- und Brandschutzmaterial an einer oder beiden Oberflächen mit einer Verstärkungsschicht versehen, die beispielsweise aus einem flammfesten Gewebe oder Vlies oder Glasfasern und in besonders bevorzugter Weise aus einer gegebenenfalls perforierten Metallfolie, insbesondere einer dünnen Aluminiumfolie mit einer Dicke von 10 bis 100 µm, vorzugsweise 20 bis 50 µm versehen ist.

Das erfindungsgemäße Isolier- und Brandschutzmaterial besitzt eine höhere Temperaturbeständigkeit und bessere mechanische Eigenschaften als herkömmliche Markprodukte. Es enthält so gut wie kein Kristallwasser und hat damit deutlich bessere Isoliereigenschaften und zeichnet sich durch seine deutlich geringere Dichte als herkömmliche Silikat-Isoliermaterialien aus. Darüber hinaus ist aufgrund der besonderen Bestandteilskombination und des angewandten Verfahrens zur Herstellung dieser Materialien nicht mit einer Entwicklung toxischer Gase auch bei extremen Temperaturen im Brandfall zu erwarten.

Dieses erfindungsgemäße Isolier- und Brandschutzmaterial eignet sich hervorragend zur thermischen Isolation von Hitzequellen, wie Backöfen, Kraftfahrzeugkatalysatoren, Motorraumabtrennungen in Kraftfahrzeugen. Heizkesseln und dergleichen. Aufgrund seiner geringen Dichte, die bei der bevorzugten Ausführungsform etwa 150 kg/m³ beträgt, ergibt sich eine hervorragende Wärmeisolation. Dabei läßt sich insbesondere im Fall des beidseitig mit einer Aluminiumfolie beschichteten Materials eine einfache Verarbeitung zu beliebigen, auch gekrümmten und gewölbten Oberflächen durchführen.

Ein weiterer Gegenstand der Erfindung ist das Verfahren zur Herstellung dieses Isolier- und Brandschutzmaterials, das dadurch gekennzeichnet ist, daß man
a) das quellfähige Schichtsilikat unter Verwendung eines Schaumbildners in Wasser unter Bildung eines feine Luftbläschen enthaltenden Schaums auf mindestens das 1 bis 10-fache Volumen aufschäumt;
b) in einem getrennten Behälter Wasser mit dem kolloidalen Siliciumdioxid. Aluminiumoxid und/oder Alkalisilikat vermischt, unter ständigem Rühren die Silikatstäbchen zugibt und nach Erhalt einer homogenen Mischung eine wäßrige Lösung des Aluminiumsulfats zur Bildung einer Dispersion zusetzt;
c) den in Stufe a) erhaltenen Schaum mit der in der Stufe b) erhaltenen Dispersion gleichmäßig vermischt,
d) das Hydrophobierungsmittel einarbeitet und
e) die erhaltene Schaumdispersion trocknet und calciniert.

Vorzugsweise wendet man in der Stufe a) ein Gewichtsverhältnis von quellfähigem Schichtsilikat zu Wasser von 1: 3 bis 1 : 100, vorzugsweise von 1: 15 bis 1 : 25 an, während es bevorzugt ist, in der Stufe b) ein Gewichtsverhältnis von kolloidalem Siliciumdioxid, Aluminiumoxid und/oder Alkalisilikat zu Wasser von 1 : 0,5 bis 1 : 20, vorzugsweise von 1 : 1 bis 1 : 3 einzuhalten.

Beim Aufschäumen in der Stufe a) verwendet man vorzugsweise als Schaumbildner ein nichtionisches Tensid, insbesondere ein Fettalkoholethoxylat, ein Alkylphenolethoxylat, einen Sorbitanfettsäureester, ein Alkylpolyglucosid, ein N-Methylglucamid und insbesondere ein Aminoxid, wie besondere Alkylamidoaminoxid. Dabei bewirkt man das Aufschäumen vorzugsweise durch mechanisches Aufschlagen mit Hilfe eines Rührers, gegebenenfalls unter Einblasen eines inerten Gases, wie Luft, Preßluft oder Stickstoff, wobei die anfängliche Mischung zu einem Schaum aufgeschlagen wird, der mindestens das eins- bis zehnfache, vorzugsweise das dreifache Volumen der ursprünglichen Mischung besitzt und Gasbläschen mit einer Größe von 0,1 bis 10 mm, vorzugsweise 0,4 bis 1,0 mm aufweist.

In der Stufe b) verwendet man als kolloidales Siliciumdioxid, vorzugsweise eine kolloidale Lösung von diskreten, dichten, sphärischen Siliciumdioxidteilchen mit einem durchschnittlichen Teilchendurchmesser von 40 nm, wobei man vorzugsweise ein Produkt einsetzt, das unter der Bezeichnung Bindzil 40NH₃/80 von der Firma Akzo Nobel erhältlich ist.
Als Aluminiumoxid verwendet man vorzugsweise ein Aluminiumhydroxidsol und als Alkalisilikat vorzugsweise Wasserglas.

In der Stufe b) wird zunächst durch Vermischen von Wasser mit kolloidalem Siliciumdioxid, Aluminiumoxid und/oder dem Alkalisilicat ein Siliciumdioxidsol, Aluminiumoxidsol, beziehungsweise eine Alkalisilicatlösung gebildet, in die dann die Silikatstäbchen eingetragen werden, worauf nach dem Erhalt einer homogenen Mischung eine wässrige Lösung des Aluminiumsulfats in einer solchen Menge zugesetzt wird, daß eine Verfestigung des Silicumdioxidsols, Aluminiumoxidsols beziehungsweise Alkalisilikats durch Gelbildung erfolgt, wodurch eine Stabilisierung der Dispersion erreicht wird.

Nach dem Vermischen des in der Stufe a) erhaltenen Schaums mit dem in der Stufe b) erhaltenen Dispersion arbeitet man ein Hydrophobierungsmittel ein, vorzugsweise ein Silikon-Hydrophobierungsmittel und trocknet die Schaumdispersion und calciniert beziehungsweise tempert sie, um den bei der Stufe a) eingesetzten Schaumbildner zu entfernen, unter Beibehaltung der Wirkung des Hydrophobiermittels.

Gemäß einer bevorzugten Ausführungsform der Erfindung wird die Schaumdispersion auf einem bewegten Band oder in einer Form mit einer Anfangstemperatur von 50°C und einer Endtemperatur von 140 bis 300°C getrocknet und bei einer Temperatur im Bereich von 300 bis 600°C calciniert beziehungsweise getempert. Gemäß einer bevorzugten Ausführungsform legt man die Schaumdispersion auf ein bewegtes, feuchtigkeitsdurchlässiges und hitzebeständiges Band aus beispielsweise einem Glasgewebe oder Glasvlies auf und führt das Material durch einen Ofen, mit einer graduell von 50 auf 300°C ansteigenden Trocknungstemperatur und einer Calcinier- beziehungsweise Temper-Temperatur von 300 bis 600°C.

Dabei bewirkt man die Trocknungszeit bei diesen Temperaturen in Abhängigkeit von der Dicke des Materials und einem Zeitraum von 60 bis 180 Minuten pro Zentimeter Schichtdicke und einer Calcinier- beziehungsweise Temperzeit von 20 bis 80 Minuten pro Zentimeter Schichtdicke.

Dabei ist es möglich, die bevorzugt angewandte Verstärkungsschicht vor dem Durchführen des Materials durch den Ofen zum Trocknen und Calcinieren beziehungsweise Tempern aufzubringen unter der Voraussetzung, daß das Material der Verstärkungsschicht die angewandten Temperaturen zu überstehen vermag. Gemäß einer weiteren Ausführungsform kann man nach dem Austritt des calcinierten Materials aus dem Ofen die gewünschte Verstärkungsschicht aus vorzugsweise einer Aluminiumfolie einseitig oder beidseitig aufbringen.

Das folgende Beispiel dient der weiteren Erläuterung der Erfindung.

### BEISPIEL

Man vermischt 3,875 kg Hectorit mit 145 kg Wasser, gibt 0,356 kg eines nichtionischen oberflächenaktiven Mittels (Aminoxid WS 35 der Firma TH. Goldschmidt AG) zu, rührt das Material während einer halben Stunde heftig mit eines Hochgeschwindigkeitsmischers durch, wobei man die Dispersion auf das dreifache Volumen aufschäumt.

In einem separaten Behälter vermischt man 25 kg kolloidales Siliciumdioxid mit 56 kg Wasser, rührt 25 kg Silikatstäbchen in Form eines Wollastonitpulvers (Kemolit, Hycon der Firma Osthoff-Petrasch) ein. Dann gibt man 3,14 kg einer 10%-igen Aluminiumsulfatlösung unter Bildung eines Gels aus dem Kieselsäuresol zu, vermischt das erhaltene Gel mit dem hectorithaltigen Schaum und gibt zur Hydrophobierung 3,125 kg eines Silikonhydrophobierungsmittels zu. Dann breitet man die Dispersion zwischen zwei Glasgewebebahnen zu einer Schichtdicke von 1,5 cm aus, führt das Material mit Hilfe eines metallischen Förderbandes durch einen Trockenofen, der mit einem Temperaturgradienten von 60 bis 300°C betrieben wird.

Dieses Trocknen/Tempern erfolgt in Abhängigkeit von der Dicke des Materials im Verlaufe von 120 min pro cm, hier also im Verlaufe von 180 Minuten unter Anwendung der folgenden Temperaturschritte:
Trockenzone 1 140°C 36 Minuten (bei 1,5 cm Schichtdicke)
Trockenzone 2 150°C 36 Minuten (bei 1,5 cm Schichtdicke)
Trockenzone 3 160°C 36 Minuten (bei 1,5 cm Schichtdicke)
Trockenzone 4 170°C 36 Minuten (bei 1,5 cm Schichtdicke)
Trockenzone 5 180°C 36 Minuten (bei 1,5 cm Schichtdicke)
Temperstrecke 300°C 36 Minuten (bei 1,5 cm Schichtdicke)

Nach Ablauf der Trockungs-/Temperbehandlung erhält man ein weißes, festes Material mit einer Dichte von 150 kg/m³, einer Druckfestigkeit von 4,8 N/cm², einer Biegefestigkeit von 10 N/cm², und einer Zugfestigkeit von 2,6 N/cm².

## Patentansprüche

1. Faserfreies, nichtbrennbares, geschäumtes Isolier- und Brandschutzmaterial auf Grundlage anorganischer Materialien, **gekennzeichnet durch** einen Gehalt an 5 bis 20 Gew.-% quellfähigem Schichtsilikat, 30 bis 80 Gew.-% Silikatstäbchen, 10 bis 40 Gew.-% kolloidalem Siliciumdioxid, Aluminiumoxid und/oder Alkalisilikat, 0,05 bis 10 Gew.-% Aluminiumsulfat und 0 bis 15 Gew.-% eines Hydrophobierungsmittels.

2. Isolier- und Brandschutzmaterial nach Anspruch 1, **dadurch gekennzeichnet, daß** es eine Dichte von 80 bis 600 kg/m³, eine Druckfestigkeit von 1 bis 10 N/cm², eine Biegefestigkeit von 3 bis 50 N/cm² und eine Zugfestigkeit von 1 bis 30 N/cm² aufweist.

3. Isolier- und Brandschutzmaterial nach Anspruch 2, **dadurch gekennzeichnet, daß** es eine Dichte von 100 bis 200 kg/m³, eine Druckfestigkeit von 2 bis 6 N/cm², eine Biegefestigkeit von 5 bis 15 N/cm², eine Zugfestigkeit von 1 bis 5 N/cm² und einen Schrumpf beim Erhitzen auf 1000°C von weniger als 2% aufweist.

4. Isolier- und Brandschutzmaterial nach mindestens einem der vorhergehenden Ansprüche, **dadurch gekennzeichnet, daß** es als quellfähiges Schichtsilikat Hectorit, Montmorillonit oder Bentonit enthält.

5. Isolier- und Brandschutzmaterial nach mindestens einem der vorhergehenden Ansprüche, **dadurch gekennzeichnet, daß** es harte Silikatstäbchen mit einem Durchmesser von 0,5 bis 200 µm und einer Länge von bis zu 5 mm, vorzugsweise von 15 bis 1000 µm enthält.

6. Isolier- und Brandschutzmaterial nach Anspruch 5, **dadurch gekennzeichnet, daß** es harte Silikatstäbchen aus Calciumsilikat, insbesondere Wollastonit enthält.

7. Isolier- und Brandschutzmaterial nach mindestens einem der vorhergehenden Ansprüche, **dadurch gekennzeichnet, daß** es ein Wachse oder ein Silikon, insbesondere ein Polyorganosiloxan als Hydrophobierungsmittel enthält.

8. Isolier- und Brandschutzmaterial nach mindestens einem der vorhergehenden Ansprüche, **dadurch gekennzeichnet, daß** es an der Oberfläche einseitig oder beidseitig mit einer Verstärkungsschicht versehen ist.

9. Isolier- und Brandschutzmaterial nach Anspruch 8, **dadurch gekennzeichnet, daß** es mit einer Verstärkungsschicht aus einer Metallfolie, vorzugsweise Aluminiumfolie, und/oder eines flammfesten Gewebes oder Vlieses versehen ist.

10. Verfahren zur Herstellung des Isolier- und Brandschutzmaterials nach den vorhergehenden Ansprüchen, **dadurch gekennzeichnet, daß** man
a) das quellfähige Schichtsilikat unter Verwendung eines Schaumbildners in Wasser unter Bildung eines feine Luftbläschen enthaltenden Schaums auf mindestens das 1 bis 10-fache Volumen aufschäumt;
b) in einem getrennten Behälter Wasser mit dem kolloidalen Siliciumdioxid. Aluminiumoxid und/oder Alkalisilikat vermischt, unter ständigem Rühren die Silikatstäbchen zugibt und nach Erhalt einer homogenen Mischung eine wäßrige Lösung des Aluminiumsulfats zur Bildung einer Dispersion zusetzt;
c) den in Stufe a) erhaltenen Schaum mit der in der Stufe b) erhaltenen Dispersion gleichmäßig vermischt,
d) das Hydrophobierungsmittel einarbeitet und
e) die erhaltene Schaumdispersion trocknet und calciniert beziehungsweise tempert.

11. Verfahren nach Anspruch 10, **dadurch gekennzeichnet, daß** man in der Stufe a) ein Gewichtsverhältnis von quellfähigem Schichtsilikat zu Wasser von 1:3 bis 1:100, vorzugsweise von 1:15 bis 1:25 anwendet.

12. Verfahren nach Anspruch 10 oder 11, **dadurch gekennzeichnet, daß** man in der Stufe b) ein Gewichtsverhältnis von kolloidalen Siliciumdioxid. Aluminiumoxid und/oder Alkalisilikat zu Wasser von 1:0,5 bis 1:20, vorzugsweise von 1:1 bis 1:3 anwendet.

13. Verfahren nach den Ansprüchen 10 bis 12, **dadurch gekennzeichnet, daß** man als Schaumbildner ein nichtionisches Tensid, insbesondere ein Alkylamidoaminoxid einsetzt.

14. Verfahren nach den Ansprüchen 10 bis 13, **dadurch gekennzeichnet, daß** man das Aufschäumen durch mechanisches Aufschlagen, gegebenenfalls unter Einblasen eines Gases, wie Luft, Preßluft oder Stickstoff bewerkstelligt.

15. Verfahren nach Anspruch 14, **dadurch gekennzeichnet, daß** man beim Aufschäumen Gasbläschen mit einer Größe von 0,1 bis 10 mm, vorzugsweise von 0,4 bis 1,0 mm bildet.

16. Verfahren nach den Ansprüchen 10 bis 15, **dadurch gekennzeichnet, daß** man die Schaumdispersion auf einem bewegten Band oder in einer Form mit einer Anfangstemperatur von 50°C und einer Endtemperatur von 140 bis 300°C trocknet und bei einer Temperatur im Bereich von 300 bis 600°C calciniert beziehungsweise tempert.

17. Verfahren nach Anspruch 16, **dadurch gekennzeichnet, daß** man das die Schaumdispersion auf einem bewegten feuchtigkeitsdurchlässigen Band bei einer graduell von 50 auf 300°C ansteigenden Trocknungstemperatur und einer Trocknungszeit von 60 bis 180 min pro cm Schichtdicke trocknet und einer Calcinier- beziehungsweise Temperzeit von 20 bis 80 min pro cm Schichtdicke bei 300 bis 600°C calciniert beziehungsweise tempert.

## Claims

1. A fibre-free, incombustible, foamed insulation and fireproof material on the basis of inorganic materials, **characterized by** a content of 5 to 20% by weight of a swellable layered silicate, 30 to 80% by weight of silicate rods, 10 to 40% by weight of colloidal silicon dioxide, alumina and/or alkali silicate, 0.05 to 10% by weight of aluminium sulphate and 0 to 15% by weight of a hydrophobing agent.

2. The insulation and fireproof material as claimed in claim 1, **characterized by** having a density of 80 to 600 kg/m³, a compressive strength of 1 to 10 N/cm², a bending strength of 3 to 50 N/cm² and a tensile strength of 1 to 30 N/cm².

3. The insulation and fireproof material as claimed in claim 2, **characterized by** having a density of 100 to 200 kg/m³, a compressive strength of 2 to 6 N/cm², a bending strength of 5 to 15 N/cm², a tensile strength of 1 to 5 N/cm² and exhibiting shrinkage of less than 2% on heating to 1,000°C.

4. The insulation and fireproof material as claimed in at least one of the preceding claims, **characterized in that** as the swellable layered silicate the material contains hectorite, montmorillonite or bentonite.

5. The insulation and fireproof material as claimed in at least one of the preceding claims, **characterized by** containing rigid silicate rods having a diameter of 0.5 to 200 *µ*m and a length of up to 5 mm, preferably of 15 to 1,000 *µ*m.

6. The insulation and fireproof material as claimed in claim 5, **characterized by** containing rigid silicate rods consisting of calcium silicate, in particular wollastonite.

7. The insulation and fireproof material as claimed in at least one of the preceding claims, **characterized in that** as the hydrophobing agent the material contains a wax or a silicone, in particular a polyorganosiloxane.

8. The insulation and fireproof material as claimed in at least one of the preceding claims, **characterized in that** a reinforcing layer is provided on one side or both sides of the surface of the material.

9. The insulation and fireproof material as claimed in claim 8, **characterized by** being provided with a reinforcing layer consisting of a metal foil, preferably aluminium foil, and/or of a flameproof fabric or fleece.

10. A method for the manufacture of the insulation and fireproof material as claimed in the preceding claims, **characterized in that**
a) the swellable layered silicate is foamed in water to increase its volume at least by a factor of 1 to 10 using a foaming agent to produce a foam containing fine air bubbles;
b) water is mixed in a separate container with the colloidal silicon dioxide, alumina and/or alkali silicate, the silicate rods are added under constant stirring, and on obtaining a homogeneous mixture an aqueous solution of the aluminium sulphate is added to form a dispersion;
c) the foam obtained in step a) is mixed uniformly with the dispersion obtained in step b);
d) the hydrophobing agent is incorporated, and
e) the resultant foam dispersion is dried and calcined or tempered.

11. The method as claimed in claim 10, **characterized in that** in step a) there is applied a weight ratio of swellable layered silicate to water of 1:3 to 1:100, preferably of 1:15 to 1:25.

12. The method as claimed in claim 10 or 11, **characterized in that** in step b) there is applied a weight ratio of colloidal silicon dioxide, alumina and/or alkali silicate to water of 1:0.5 to 1:20, preferably of 1:1 1 to 1:3.

13. The method as claimed in claims 10 to 12, **characterized in that** as the foaming agent there is used a nonionic surfactant, in particular an alkylamido amine oxide.

14. The method as claimed in claims 10 to 13, **characterized in that** the foaming is accomplished by mechanical stirring, optionally while blowing in a gas such as air, compressed air or nitrogen.

15. The method as claimed in claim 14, **characterized in that** during foaming there are produced gas bubbles having a size of 0.1 to 10 mm, preferably of 0.4 to 1.0 mm.

16. The method as claimed in claims 10 to 15, **characterized in that** the foam dispersion is dried on a moving belt or in a mould at an initial temperature of 50°C and a final temperature of 140 to 300°C and calcined or tempered at a temperature in the range of 300 to 600°C.

17. The method as claimed in claim 16, **characterized in that** the foam dispersion is dried on a moisture-permeable moving belt at a drying temperature gradually rising from 50 to 300°C and a drying time of 60 to 180 minutes per cm of layer thickness and calcined or tempered at a calcination or tempering time of 20 to 80 minutes per cm of layer thickness at 300 to 600°C.

## Revendications

1. Matériau isolant et ignifugeant moussé et incombustible exempt de fibres à base de matériaux inorganiques, **caractérisé par** une teneur de 5 à 20 % en poids de phyllosilicate apte au gonflement, de 30 à 80 % en poids de bâtonnets de silicate, de 10 à 40 % en poids de dioxyde de silicium colloïdal, d'oxyde d'aluminium et/ou de silicate alcalin, de 0,05 à 10 % en poids de sulfate d'aluminium et de 0 à 15 % en poids d'un produit imperméabilisant.

2. Matériau isolant et ignifugeant selon la revendication 1, **caractérisé en ce qu'**il présente une densité de 80 à 600 kg/m³, une résistance à la pression de 1 à 10 N/cm², une résistance à la flexion de 3 à 50 N/cm² et une résistance à la traction de 1 à 30 N/cm².

3. Matériau isolant et ignifugeant selon la revendication 2, **caractérisé en ce qu'**il présente une densité de 100 à 200 kg/m³, une résistance à la pression de 2 à 6 N/cm², une résistance à la flexion de 5 à 15 N/cm², une résistance à la traction de 1 à 5 N/cm², et un retrait lors du chauffage à 1000 °C de moins de 2 %.

4. Matériau isolant et ignifugeant selon au moins une des revendications précédentes, **caractérisé en ce qu'**il contient en tant que phyllosilicate apte au gonflement de l'hectorite, de la montmorillonite ou de la bentonite.

5. Matériau isolant et ignifugeant selon au moins une des revendications précédentes, **caractérisé en ce qu'**il contient des bâtonnets de silicate durs d'un diamètre de 0,5 à 200 µm et d'une longueur maximale de 5 mm, de préférence de 15 à 1000 µm.

6. Matériau isolant et ignifugeant selon la revendication 5, **caractérisé en ce qu'**il contient des bâtonnets de silicate durs en silicate de calcium, en particulier de la wollastonite.

7. Matériau isolant et ignifugeant selon au moins une des revendications précédentes, **caractérisé en ce qu'**il contient une cire ou un silicone, en particulier un polyorganosiloxane en tant que produit imperméabilisant.

8. Matériau isolant et ignifugeant selon au moins une des revendications précédentes, **caractérisé en ce qu'**il est doté à la surface d'un seul côté ou des deux côtés d'une couche de renforcement.

9. Matériau isolant et ignifugeant selon la revendication 8, **caractérisé en ce qu'**il est doté d'une couche de renforcement constituée d'une feuille de métal, de préférence d'une feuille d'aluminium et/ou d'un tissu ou d'un voile ignifugé.

10. Procédé de fabrication du matériau isolant et ignifugeant selon les revendications précédentes, **caractérisé en ce que** l'on
a) fait mousser le phyllosilicate apte au gonflement d'au moins 1 à 10 fois le volume à l'aide d'un agent moussant dans l'eau en formant une mousse contenant de fines bulles d'air ;
b) mélange dans un récipient séparé, de l'eau avec le dioxyde de silicium colloïdal, l'oxyde d'aluminium et/ou le silicate alcalin, on ajoute les bâtonnets de silicate sous agitation constante, et après avoir obtenu un mélange homogène on ajoute une solution aqueuse du sulfate d'aluminium pour former une dispersion ;
c) mélange la mousse obtenue dans l'étape a) uniformément à la dispersion obtenue à l'étape b),
d) incorpore le produit imperméabilisant et
e) sèche et calcine et/ou recuit la dispersion moussée obtenue.

11. Procédé selon la revendication 10, **caractérisé en ce qu'**on utilise dans l'étape a) un rapport de poids entre le phyllosilicate apte au gonflement et l'eau de 1:3 à 1:100, de préférence de 1:15 à 1:25.

12. Procédé selon la revendication 10 ou 11,
**caractérisé en ce qu'**on utilise dans l'étape b) un rapport de poids entre le dioxyde de silicium colloïdal, l'oxyde d'aluminium et/ou le silicate alcalin et l'eau de 1:0,5 à 1:20, de préférence de 1:1 à 1:3.

13. Procédé selon les revendications 10 à 12, **caractérisé en ce qu'**on utilise en tant qu'agent moussant un agent tensioactif non ionique, en particulier un alkylamidoaminoxyde.

14. Procédé selon les revendications 10 à 13, **caractérisé en ce qu'**on réalise le moussage par fouettage mécanique, éventuellement en insufflant un gaz, tel que de l'air, de l'air comprimé ou de l'azote.

15. Procédé selon la revendication 14, **caractérisé en que** lors du moussage se forment des bulles de gaz d'une dimension de 0,1 à 10 mm, de préférence de 0,4 à 1,0 mm.

16. Procédé selon les revendications 10 à 15, **caractérisé en ce que** la dispersion moussée est séchée sur une bande transporteuse en mouvement ou dans un moule avec une température de départ de 50 °C et une température finale de 140 à 300 °C, et qu'elle est calcinée et/ou recuite à une température dans la plage de 300 à 600 °C.

17. Procédé selon la revendication 16, **caractérisé en ce que** la dispersion moussée est séchée sur une bande perméable à l'humidité en mouvement à une température de séchage croissant progressivement de 50 à 300 °C et pendant un temps de séchage de 60 à 180 minutes par cm d'épaisseur de couche, et calcinée et/ou recuite pendant un temps de calcination et/ou recuite de 20 à 80 minutes par cm d'épaisseur de couche à 300 à 600 °C.
